# EUROPEAN PATENT SPECIFICATION

(11) **EP 3 984 812 B1**
(45) Date of publication and mention of the grant of the patent: **02.08.2023**
(21) Application number: 20201861.0
(22) Date of filing: 14.10.2020
(51) Int. Cl.: B60M 1/34

(54) **RAIL ELEMENT AND SYSTEM FOR ELECTRICAL FEEDING OF ROAD VEHICLES**
SCHIENENELEMENT UND -SYSTEM ZUR ELEKTRISCHEN SPEISUNG VON STRASSENFAHRZEUGEN
ÉLÉMENT DE RAIL ET SYSTÈME D'ALIMENTATION ÉLECTRIQUE DE VÉHICULES ROUTIERS

(43) Date of publication of application: 20.04.2022
(73) Proprietor: Elways AB, 171 60 Solna (SE)
(72) Inventor: Asplund, Gunnar, 171 60 SOLNA (SE)
(74) Representative: Groth & Co. KB

(56) References cited:
- DE-A1-102006 027 906
- GB-A- 1 341 777

## Description

### TECHNICAL FIELD

The invention relates to a rail element adapted to co-act with a current collector of an electrically propellable road vehicle for supplying electric power to said vehicle, the rail element being adapted to extend along a road section on which the vehicle is travelling. The invention further relates to a system for supplying electric power to an electrically propellable vehicle, which system comprises such a rail element.

### BACKGROUND

Concerns about the environmental impact of combustion of fossil fuels have led to an increased interest in electric vehicles, which have several potential benefits compared to vehicles with conventional internal combustion engines, including: a significant reduction of urban air pollution, as they do not emit harmful tailpipe pollutants from the on-board source of power at the point of operation; reduced greenhouse gas emissions from the on-board source of power, depending on the fuel and technology used for electricity generation and/or charging the batteries and reduced dependency on fossil fuels with increasingly variable supply and fluctuating prices.

However, the expense, weight and limited capacity of the lithium-ion battery packs of today limit widespread use of electric power as the main source of power in vehicles.

WO 2011/123046 proposes complementing the battery of the electric vehicle with electric feeding of the vehicle while driving. A system is disclosed for electric propulsion of a vehicle along a road comprising rail elements having grooves provided with electric conductors therein that may be put under voltage and located in longitudinal channels in the road. The vehicle is equipped with a current collector which during contact with the electric conductors allows for transfer of electric power between the electric conductors and the vehicle to propel the vehicle and charge its battery or set of batteries. One problem with the system in this publication is that the rail elements need to have a certain height so that the electric conductors are disposed in the grooves at a safe touching distance from the opening/upper end of the groove. This means that installation of the rail elements involves making quite deep channels in the road to recess the rail element, usually by means of routing. In some cases, this means that the channel extends through the whole paving (asphalt, cement or the like) of the road which weakens the road. On certain types of road sections, such as bridges, such deep channels may be particularly disadvantageous or not even possible, in particular at joints of bridge sections.

DE 102006027906 A1 discloses a system having a current collector with two pairs of rollers co-acting with a rail having a rail housing formed as a semicircular tunnel arc divided into two halves provided with openings/grooves in the outer surface of the rail housing. The openings/grooves are closed by flaps and are directed radially at an acute angle (about 45 degrees) relative the road surface.

GB 1341777 discloses an electrical distribution assembly for railways, which assembly comprises rail-shaped conductors borne by transverse support members being provided with protective covering plates/screens.

### SUMMARY

An object of the invention is to solve or improve on the problem mentioned above in the background section.

These and other objects are achieved by the present invention by means of rail element and a system according to the independent claims.

According to a first aspect of the invention, there is provided a rail element adapted to co-act with a current collector of an electrically propellable road vehicle for supplying electric power to said vehicle, the rail element being adapted to extend along a road section on which the vehicle is travelling. The rail element is adapted to be located on, or to be partly recessed in, a road surface of said road section, wherein at least two grooves are formed at least partly by said rail element, wherein two grooves are formed at opposite lateral sides thereof with said grooves having openings facing in opposite lateral direction relative a lengthwise direction of the rail element. At least one electric conductor is arranged in each of said grooves, said electric conductors extending along the lengthwise direction of said rail element and being adapted to be put under voltage for supplying said electric power. Said two grooves are disposed in a common horizontal plane. It is foreseeable within the scope of the invention that an AC or DC feeding of the electrically propellable vehicle is achieved by means of at least two conductors arranged in respective grooves, or by means of two or more of the at least two conductors being arranged in a common groove.

It is understood that the rail element has an elongated shape, i.e. has a substantially greater length the width and height. It is furthermore understood that the rail element normally extends with its lengthwise direction in parallel with the longitudinal direction of the road section. Thus, the lateral directions of the rail element may coincide with the lateral directions of the road section when arranged thereon.

The invention is based on the insight that the overall height of the rail element can be substantially reduced by having laterally/sideways directed grooves, i.e. horizontally arranged grooves rather than vertically arranged grooves as in the prior art.

In embodiments, the at least one groove is formed in said rail element, i.e. is formed solely by said rail element. Such a rail element is advantageously arranged partly recessed in the road surface such that a lower wall portion of the groove is vertically aligned with the road surface. The rail element may comprise parallel upper and lower parts arranged at a distance from each other and being connected to each other with spacing means to form the grooves between said upper and lower parts. The upper and lower parts may be formed integrally with the spacing means or may be separate parts which are attached to each other to form the rail element. The lower part is advantageously arranged in vertical alignment with the road surface such that water may flow freely in and out of the groove(s).

In an alternative embodiment, the rail element comprises an upper part adapted to be arranged in parallel with the road surface at a distance therefrom, the upper part being adapted to be connected to the road surface via spacing means to form the groove(s) between said upper part and said road surface. Consequently, the groove(s) is/are formed partly by the rail element, and partly by the road surface. The upper part and the spacing means are attached to the road surface by means of attachment means, for instance screws, nails or adhesive/glue. Since the road surface defines the lower wall portion of the groove, water may flow freely in and out of the groove(s). This embodiment is advantageous since it can be installed on a road section without making one or more channels in the road surface/paving of the road.

The spacing means may comprise a plurality of spacing elements arranged spaced apart in the lengthwise direction of the rail element to provide laterally directed through channels in said rail element. Such through channels are advantageous since water may flow freely through the rail element from one side to the other to improve drainage. The spacing elements may be spaced apart in such a manner that said through channels occupy at least 25%, preferably about 50% of the length of the rail element. Thereby, a large flow area is achieved for improved drainage.

In embodiments, the upper part of the rail element is made at least partly from a resilient material. The resilient material is resilient in the sense that the upper part bends down to make contact with the lower part or road surface when the rail element is run over by a vehicle.

In other embodiments, the upper part is made at least partly from a metallic material such as stainless steel, steel or aluminum. The material and the thickness of the upper part is configured such that the upper part does not bend down even when subjected to forces corresponding to the weight of a heavy truck.

In embodiments, at least one of the conductor(s) is/are arranged in said groove(s) at upper portion(s) thereof. In particular, the conductor(s) may be attached to the upper part(s) of the rail element. Such embodiments are advantageous since the conductor is arranged at a distance from the lower part or road surface which means that it is less exposed to dirt and water flowing in/out of the groove.

In an alternative embodiment, at least one of the conductor(s) is arranged at a lower portion of the corresponding groove(s). In embodiments where the rail element comprises a lower part, the conductor(s) may be connected to, or recessed in, the lower part. This may be advantageous since a large cross-sectional area of the conductor(s) may be allowed compared to a position at an upper portion of the groove, where a thick conductor would either inhibit drainage through the rail element and/or weaken the rail element if recessed there into.

In embodiments, the at least one groove has dimensions corresponding to IEC 60529. In other words, the groove has a width of equal to or less than 12 mm, and the at least one electric conductor is arranged at least 80 mm below an upper end of the groove. This is advantageous since the electric conductor is effectively protected from accidental touching contact.

According to a second aspect of the invention, there is provided a system for supplying electric power to an electrically propellable vehicle along a road section on which the vehicle is travelling, said system comprising at least one rail element according to the first aspect of the invention, said rail element being placed on, or partly recessed in, a road surface of said road section with its lengthwise direction in parallel with the lengthwise direction of said road section, wherein said at least one rail element is oriented relative the road section such that the openings of said two grooves formed at opposite lateral sides are facing in opposite lateral directions of the road section. In embodiments with two or more rail elements, the rail elements are arranged consecutively. The system may furthermore comprise a current collector, or a vehicle with a current collector, wherein the current collector is adapted to co-act with said rail element, wherein the current collector comprises contact elements, and wherein the current collector is connected/connectable to said vehicle and is displaceable vertically and laterally relative the vehicle such that the contact elements are displaceable into said grooves of said rail element to connect mechanically and electrically with corresponding electric conductors of said rail element.

In embodiments of a system according to the second aspect of the invention, the rail element is partly recessed in said road surface with an upper surface of the lower part aligned with the road surface. This is advantageous since water may flow freely in and out of the groove(s).

In embodiments, the current collector comprises cleansing means to clean the grooves from particles and loose objects, which cleansing means has a front portion inclined at an acute angle relative the longitudinal direction of the rail element when the current collector is co-acting with the rail element. Put differently, the front portion of the cleansing means is inclined at an acute angle with respect to the bottom part thereof. The cleansing means may be a separate cleansing device (as described in applicants' patent EP2994337B1), or may be integrally formed with the contact element(s) of the current collector which makes electrical contact with the electric conductor(s) of the rail element. In embodiments, the cleansing device may be suspended in a corresponding manner as in applicants' patent EP11763160B1, which in the present embodiment means that the cleansing device is rotatable around a substantially vertical axis, which axis is resiliently moveable in a horizontal direction away from said rail element.

In embodiments, the electric conductors of the rail elements are connected via one or more switches to vehicle-external electric power sources. The electric conductors are preferably only connected to the power sources via the switches during time periods or slots when the presence of a vehicle belonging to the system is sensed at the present road section. Thereby, a further electrical security measure is provided in addition to the electrical conductor being protected by means of being arranged in a groove, as described above.

The features of the embodiments described above are combinable in any practically realizable way to form embodiments having combinations of these features. Further, all features and advantages of embodiments described above with reference to the first aspect of the invention may be applied in corresponding embodiments of the second aspect of the invention and vice versa.

### BRIEF DESCRIPTION OF THE DRAWINGS

Above discussed and other aspects of the present invention will now be described in more detail using the appended drawings, which show presently preferred embodiments of the invention, wherein:
fig. 1 shows a cross-section view of an embodiment of a rail element and a system according to the invention;
fig. 2 shows a cross-section view taken in a horizontal plane through the vertical centre of the rail element in fig. 1 as seen from above, further illustrated with parts of a current collector;
fig. 3 shows a cross-section view of another embodiment of a rail element and system according to the invention, further illustrated with parts of a current collector;
fig. 4 shows a cross-section view of yet another embodiment of a rail element and a system according to the invention;
fig. 5 shows a top view of the rail element and system in fig. 3 shown without the upper part of the rail element, but with the electric conductors;
fig. 6 shows the rail element and system of figures 3 and 5 in a perspective view arranged on a road section, where the upper part of the rail element is transparent for illustrative purposes;
fig. 7 shows a side view of the rail element and system in figures 3, 5 and 6;
fig. 8 shows a perspective view of the rail element and system in figures 3, 5-7 together with a current collector illustrated in two different positions, and
fig. 9 shows a cross-section view of a similar embodiment as in fig. 3, except that the upper part is flexible.

### DETAILED DESCRIPTION

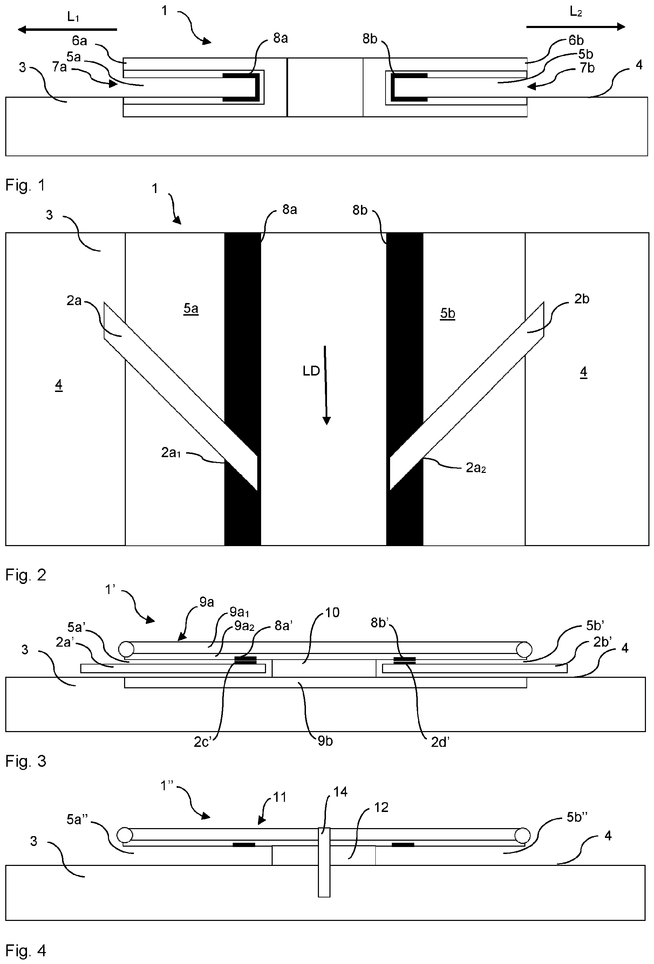

Fig. 1 shows a rail element 1 being an embodiment of the first aspect of the invention, which is arranged partly recessed in the road surface 4 of a road section 3, thus also illustrating an embodiment of a system according to the second aspect of the invention. Two grooves 5a, 5b are formed at in the rail element at opposite lateral sides 6a, 6b of the rail element with respective openings 7a, 7b of the grooves facing in opposite lateral directions L₁, L₂ relative a lengthwise direction LD of the rail element (see fig. 2). A U-shaped electric conductor 8a, 8b is arranged at the innermost/bottom part of each groove 5a, 5b. As can be seen in the figure, the two grooves are disposed in a common horizontal plane. Further, as can be seen in the figure, a lower wall portion of the grooves 5a, 5b are vertically aligned with the road surface 4 such that water may flow freely in and out of the grooves. The rail element 1 is formed from two identical U-shaped parts connected to each other via a spacing element.

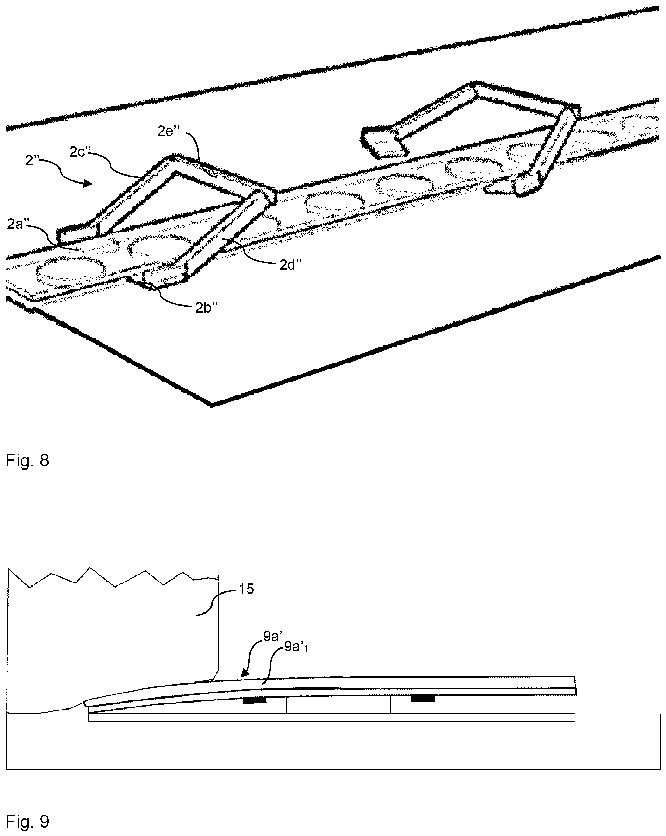

Fig. 2 shows a cross-section view taken in a horizontal plane through the vertical centre of the rail element in fig. 1 as seen from above. Also shown is a pair of current collector contact elements 2a, 2b being in mechanical and electrical contact with the conductors 8a, 8b. The contact elements extend into the grooves 5a, 5b from respective side of the rail element. The two electric conductors are normally used for AC feeding of electrical power to the vehicle via the current collector. In addition to the two contact elements, the current collector may be provided with a ground contact element which makes contact with the a ground conductor, which may for instance be arranged at an upper/outer surface of the rail element in a corresponding manner as described in applicants' own application SE 1951044-5. The front portions 2a₁, 2a₂ of the contact elements 2a, 2b are inclined at acute angles with respect to the corresponding bottom part thereof. The front portions form cleansing means and act as "plows" to clear the grooves from dirt. The contact elements are connected to (not shown) current collector arms which in turn connect to the vehicle, as is known from the applicants' previous patent applications, and further illustrated in another embodiment shown in fig. 8.

It is noted that fig. 2 only shows a lengthwise segment of the rail element - the rail element actually has an elongated shape, i.e. has a substantially greater length in its lengthwise direction LD than width and height. It is further noted that the rail element normally extends at the centre of the road with its lengthwise direction LD in parallel with the longitudinal direction of the road section. Thus, the lateral directions of the rail element coincide with the lateral directions of the road section.

Fig. 3 shows a cross-section view of another embodiment of a rail element and system according to the invention. Just like in fig. 1, the rail element 1' is arranged partly recessed in the road surface 4 of a road section 3, and the two grooves 5a', 5b' are formed at in the rail element at opposite lateral sides of the rail element with respective openings of the grooves facing in opposite lateral directions relative a lengthwise direction of the rail element. Unlike in fig. 1 however, the electric conductors 8a', 8b' are strip-shaped and arranged at an upper portion of the grooves. Further, the rail element is structurally different being formed by parallel upper 9a and lower parts 9b arranged at a distance from each other and being connected to each other with spacing means 10 to form the grooves 5a', 5b' there between. The lower part 9b is arranged in vertical alignment with the road surface 4 such that water may flow freely in and out of the grooves. The upper part 9a is formed by two layers 9a₁ and 9a₂, the upper layer 9a₁ being made from stainless steel having a thickness adapted such that the upper part 9a does not bend down even when subjected to forces corresponding to the weight of a heavy truck. The conductors 8a' and 8b' are attached to or recessed into the lower layer 9a₂. Further illustrated are contact elements 2a', 2b' which correspond to the contact elements in fig. 2 except that they are configured to make contact (via contact portions 2c', 2d') solely with the strip-shaped conductors 8a', 8b'. Furthermore, as can be seen in the figure, the upper part 9a is provided with rounded side edges to prevent/reduce possible damages to vehicle tyres while over-running the rail element.

Fig. 4 shows a cross-section view of yet another embodiment of a rail element and a system according to the invention. This embodiment closely corresponds to the embodiment in fig. 3, with the main difference being that the rail element only comprises an upper part 11, and not any lower part. Instead, the upper part 11 is arranged in parallel with the road surface 4 at a distance therefrom, the upper part being connected to the road surface with spacing means 12 therebetween to form the grooves 5a" and 5b" between the upper part and the road surface. The upper part 11 and the spacing means 12 are attached to the road surface by means of nails 14 through the center of the spacing means. The rail element in fig. 4 is arranged onto the road surface, without any routing of channels in the road surface required.

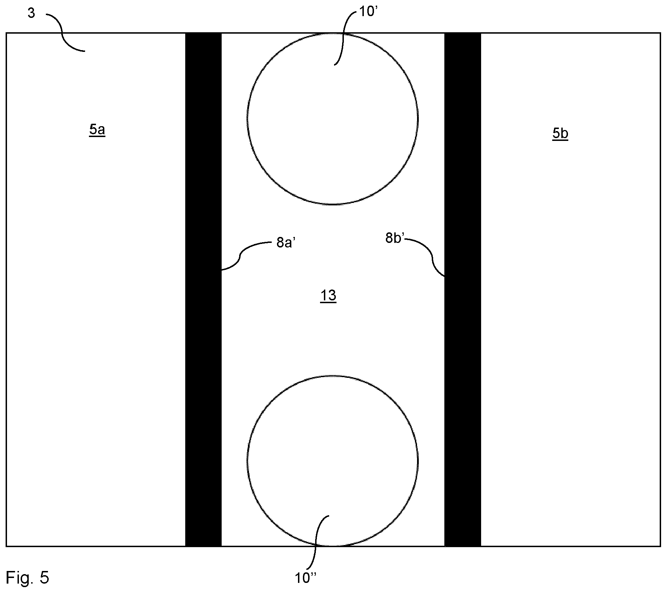

Fig. 5 shows a top view of a segment of the rail element and system in fig. 3 shown without the upper part 9a of the rail element, but with the electric conductors 8a', 8b'. A plurality of spacing elements 10', 10" are arranged consecutively along the lengthwise direction of the rail element. The spacing elements have a circular cross-section and are spaced apart in the lengthwise direction to provide laterally directed through channels 13 in said rail element (only one channel is shown in fig. 5). The spacing elements are spaced apart such that the through channels occupy about 50% of the length of the rail element.

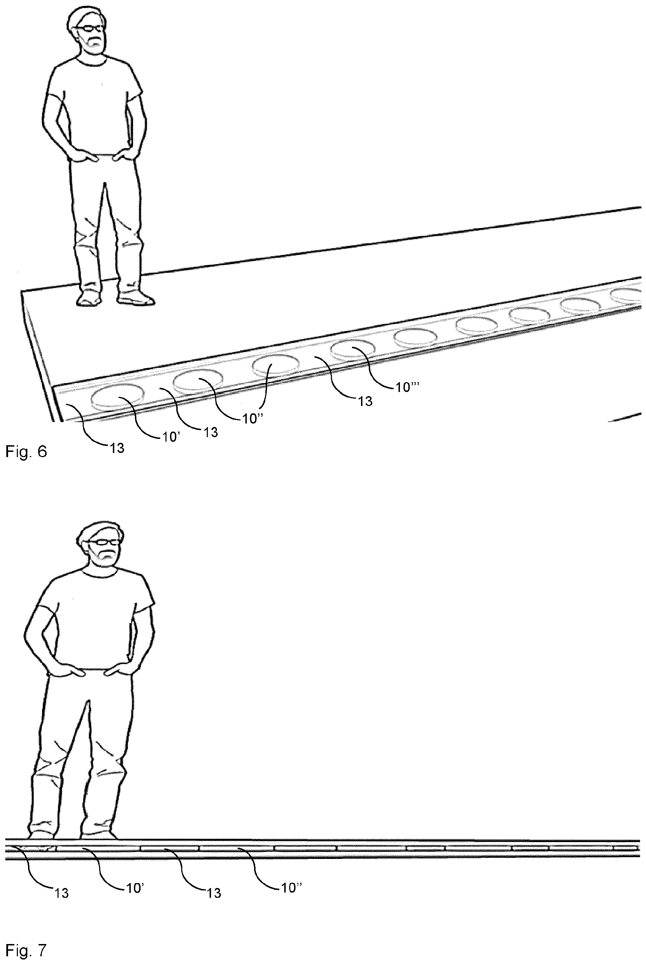

Fig. 6 shows the rail element and system of figures 3 and 5 in a perspective view arranged partly recessed in the road surface of a road section, where the upper part of the rail element is transparent for illustrative purposes. Spacing elements 10', 10", 10‴ and through channels 13 can be seen (not all are provided with figure references).

Fig. 7 shows a side view of the rail element and system in figures 3, 5 and 6. As illustrated, the through channels 13 allow water and dirt to flow straight through the rail element.

Fig. 8 shows a perspective view of the rail element and system in figures 3, 5-7 together with a current collector illustrated in two different positions. The current collector 2" comprises contact elements 2a", 2b" adapted to connect electrically and mechanically with the conductors in the rail element. The contact elements are connected to collector arms 2c", 2d" configured to rotate vertically and horizontally to allow the contact elements to enter the groves from the side. The collector arms are attached to a sliding device 2e" adapted to be displaceable in a lateral direction of the vehicle at an underside thereof. In the first illustrated position to the left in fig. 8, the contact elements are in contact with the conductors. In the second illustrated position, the collector arms have been rotated laterally outwards such that the contact elements no longer are disposed in the grooves. The contact elements are provided with an inclined front portions in the same manner as shown in fig. 2, although inclined to a lesser extent.

In an alternative embodiment, the current collector may be of the type described in applicants' patent application SE 19206292-5, although with the contact elements disposed at right angle relative to the disclosure therein, to allow the contact elements to enter the laterally directed grooves of the present invention by means of sideways rotation around the rotational axis.

Fig. 9 shows a cross-section view of a similar embodiment as in fig. 3, except that the upper layer 9a'₁ of the upper part 9a' is made from a resilient/flexible material which means that the upper part 9a' is bent down to make contact with the lower part or road surface when the rail element is run over by a vehicle tire 15.

The description above and the appended drawings are to be considered as non-limiting examples of the invention. The person skilled in the art realizes that several changes and modifications may be made within the scope of the claims. For example, the conductors may be arranged at different positions inside the grooves, for instance at a lower portion thereof, and may have a different shape or cross-section. Further, the spacing means may be different, and may even be formed by a single spacing element provided with through holes for drainage. Further, as explained above, the current collector may be of any known type or modification thereof which allows its contact element to co-act with the laterally directed grooves.

## Claims

1. Rail element (1; 1'; 1") adapted to co-act with a current collector (2") of an electrically propellable road vehicle for supplying electric power to said vehicle, said rail element being adapted to extend along a road section (3) on which the vehicle is travelling, wherein said rail element is adapted to be located on, or to be partly recessed in, a road surface (4) of said road section, wherein at least two grooves (5a, 5b; 5a', 5b'; 5a", 5b") are formed at least partly by said rail element, wherein two grooves are formed at opposite lateral sides (6a, 6b) thereof with respective openings (7a, 7b) of the grooves facing in opposite lateral directions (L₁, L₂) relative a lengthwise direction (LD) of the rail element, wherein at least one electric conductor (8a, 8b; 8a', 8b'; 8a", 8b") is arranged in each of said two grooves, said electric conductors extending along the lengthwise direction of said rail element and being adapted to be put under voltage for supplying said electric power, wherein said two grooves are disposed in a common horizontal plane.

2. Rail element according to claim 1, wherein said grooves (5a, 5b; 5a', 5b') are formed in said rail element (1; 1').

3. Rail element according to claim 2, comprising parallel upper and lower parts (9a, 9b; 9a') arranged at a distance from each other and being connected to each other with spacing means (10) to form said grooves between said upper and lower parts.

4. Rail element according to claim 1, comprising an upper part (11) adapted to be arranged in parallel with the road surface at a distance therefrom, said upper part being adapted to be connected to said road surface with spacing means (12) to form said grooves (5a", 5b") between said upper part and said road surface.

5. Rail element according to any of claims 3-4, wherein said spacing means (10) comprises a plurality of spacing elements (10', 10", 10‴) arranged spaced apart in the lengthwise direction of the rail element to provide at least one laterally directed through channel (13) in said rail element.

6. Rail element according to claim 5, wherein said spacing elements (10', 10", 10‴) are spaced apart in such a manner that said at least one through channel (13), as seen in the lengthwise direction (LD) of the rail element, occupy at least 25%, preferably about 50% of the length of the rail element.

7. Rail element according to any of claims 3-6, wherein said upper part (9a) is made at least partly of a metallic material.

8. Rail element according to any of claims 3-6, wherein said upper part (9a') is made at least partly from a resilient material.

9. Rail element according to any of the preceding claims, wherein said at least one conductor (8a', 8b') is arranged in said groove (5a', 5b') at an upper portion thereof.

10. Rail element according to any of the preceding claims, wherein said at least one conductor of the at least one groove is arranged at a lower portion thereof.

11. System for supplying electric power to an electrically propellable vehicle along a road section on which the vehicle is travelling, said system comprising at least one rail element (1, 1', 1") according to any of the preceding claims, said rail element being placed on, or partly recessed in, a road surface (4) of said road section (3) with its lengthwise direction in parallel with a lengthwise direction of said road section, wherein said at least one rail element is oriented relative the road section such that the openings (7a, 7b) of the two grooves (5a, 5b; 5a', 5b'; 5a", 5b") formed at opposite lateral sides of said rail element are facing in opposite lateral directions (L₁, L₂) of the road section.

12. System according to claim 11 as dependent on claim 3, wherein said rail element (1, 1', 1") is partly recessed in said road surface (4) with an upper surface of the lower part (9b) aligned with the road surface.

13. System according to any of claims 11-12, further comprising a current collector (2") adapted to co-act with said rail element (1; 1'), wherein the current collector comprises contact elements (2a, 2b; 2a', 2b'; 2a", 2b"), and wherein the current collector is adapted to be connected to said vehicle to be displaceable vertically and laterally relative the vehicle such that the contact elements are displaceable into said grooves (5a, 5b; 5a', 5b') of said rail element to connect mechanically and electrically with corresponding electric conductors (8a, 8b; 8a', 8b') of said rail element.

14. System according to claim 13, wherein said current collector (2a, 2b; 2a', 2b') comprises cleansing means having a front portion (2a₁, 2a₂) inclined at an acute angle relative the longitudinal direction (LD) of the rail element when the current collector is co-acting with the rail element, and wherein the cleansing means is rotatable around a substantially vertical axis and resiliently moveable in a direction away from said rail element.

## Patentansprüche

1. Schienenelement (1; 1'; 1"), das ausgelegt ist, um mit einem Stromabnehmer (2") eines elektrisch angetriebenen Straßenfahrzeugs zusammenzuwirken, um dem Fahrzeug elektrische Leistung zuzuführen, wobei das Schienenelement ausgelegt ist, um sich entlang eines Straßenabschnitts (3), auf dem das Fahrzeug fährt, zu erstrecken, wobei das Schienenelement ausgelegt ist, um sich auf einer Straßenoberfläche (4) des Straßenabschnitts zu befinden oder teilweise darin versenkt zu sein, wobei mindestens zwei Aussparungen (5a, 5b; 5a', 5b'; 5a", 5b") zumindest teilweise durch das Schienenelement gebildet sind, wobei an gegenüberliegenden lateralen Seiten (6a, 6b) davon zwei Aussparungen ausgebildet sind, wobei jeweilige Öffnungen (7a, 7b) der Aussparungen in entgegengesetzte laterale Richtungen (L₁, L₂) relativ zu einer Längsrichtung (LD) des Schienenelements weisen, wobei mindestens ein elektrischer Leiter (8a, 8b; 8a', 8b'; 8a", 8b") in jeder der zwei Aussparungen angeordnet ist, wobei sich die elektrischen Leiter entlang der Längsrichtung des Schienenelements erstrecken und ausgelegt sind, um unter Spannung gesetzt zu werden, um die elektrische Leistung zuzuführen, wobei die zwei Aussparungen in einer gemeinsamen horizontalen Ebene angeordnet sind.

2. Schienenelement nach Anspruch 1, wobei die Aussparungen (5a, 5b; 5a', 5b') in dem Schienenelement (1; 1`) gebildet sind.

3. Schienenelement nach Anspruch 2, umfassend ein oberes und ein unteres Teil (9a, 9b; 9a'), die parallel sind, die in einem Abstand voneinander angeordnet und mit Abstandshaltern (10) miteinander verbunden sind, um die Aussparungen zwischen dem oberen und dem unteren Teil zu bilden.

4. Schienenelement nach Anspruch 1, umfassend ein oberes Teil (11), das ausgelegt ist, um parallel zu der Straßenoberfläche in einem Abstand von dieser angeordnet zu sein, wobei das obere Teil ausgelegt ist, um mit der Straßenoberfläche mit Abstandshaltern (12) verbunden zu sein, um die Aussparungen (5a", 5b") zwischen dem oberen Teil und der Straßenoberfläche zu bilden.

5. Schienenelement nach einem der Ansprüche 3-4, wobei die Abstandshalter (10) eine Vielzahl von Abstandshalterelementen (10', 10", 10‴) umfassen, die in der Längsrichtung des Schienenelements beabstandet angeordnet ist, um mindestens einen lateral gerichteten Durchgangskanal (13) in dem Schienenelement bereitzustellen.

6. Schienenelement nach Anspruch 5, wobei die Abstandshalterelemente (10', 10", 10‴) derart voneinander beabstandet sind, dass der mindestens eine Durchgangskanal (13), betrachtet in der Längsrichtung (LD) des Schienenelements, mindestens 25 %, vorzugsweise etwa 50 % der Länge des Schienenelements einnimmt.

7. Schienenelement nach einem der Ansprüche 3-6, wobei das obere Teil (9a) zumindest teilweise aus einem metallischen Material besteht.

8. Schienenelement nach einem der Ansprüche 3-6, wobei das obere Teil (9a') zumindest teilweise aus einem elastischen Material besteht.

9. Schienenelement nach einem der vorstehenden Ansprüche, wobei der mindestens eine Leiter (8a', 8b') in der Aussparung (5a', 5b') an einem oberen Abschnitt davon angeordnet ist.

10. Schienenelement nach einem der vorstehenden Ansprüche, wobei der mindestens eine Leiter der mindestens einen Aussparung an einem unteren Abschnitt davon angeordnet ist.

11. System zum Zuführen von elektrischer Leistung zu einem elektrisch angetriebenen Fahrzeug entlang eines Straßenabschnitts, auf dem das Fahrzeug fährt, wobei das System mindestens ein Schienenelement (1, 1', 1") nach einem der vorstehenden Ansprüche umfasst, wobei das Schienenelement auf einer Straßenoberfläche (4) des Straßenabschnitts (3) platziert oder teilweise darin versenkt ist, wobei seine Längsrichtung parallel zu einer Längsrichtung des Straßenabschnitts verläuft, wobei das mindestens eine Schienenelement relativ zu dem Straßenabschnitt derart ausgerichtet ist, dass die Öffnungen (7a, 7b) der zwei Aussparungen (5a, 5b; 5a', 5b'; 5a", 5b"), die an gegenüberliegenden lateralen Seiten des Schienenelements gebildet sind, in entgegengesetzte laterale Richtungen (L₁, L₂) des Straßenabschnitts weisen.

12. System nach Anspruch 11 in Abhängigkeit von Anspruch 3, wobei das Schienenelement (1, 1', 1") teilweise in der Straßenoberfläche (4) versenkt ist, wobei eine Oberseite des unteren Teils (9b) mit der Straßenoberfläche ausgerichtet ist.

13. System nach einem der Ansprüche 11-12, ferner umfassend einen Stromabnehmer (2"), der ausgelegt ist, um mit dem Schienenelement (1; 1') zusammenzuwirken, wobei der Stromabnehmer Kontaktelemente (2a, 2b; 2a', 2b'; 2a", 2bʺ) umfasst und wobei der Stromabnehmer ausgelegt ist, um mit dem Fahrzeug verbunden zu sein, um vertikal und lateral relativ zu dem Fahrzeug verschiebbar zu sein, sodass die Kontaktelemente in die Aussparungen (5a, 5b; 5a', 5b') des Schienenelements verschiebbar sind, um mechanisch und elektrisch mit entsprechenden elektrischen Leitern (8a, 8b; 8a', 8b') des Schienenelements verbunden zu sein.

14. System nach Anspruch 13, wobei der Stromabnehmer (2a, 2b; 2a', 2b') eine Reinigungseinrichtung umfasst, die einen vorderen Abschnitt (2a₁, 2a₂) aufweist, der in einem spitzen Winkel relativ zu der Längsrichtung (LD) des Schienenelements geneigt ist, wenn der Stromabnehmer mit dem Schienenelement zusammenwirkt, und wobei die Reinigungseinrichtung um eine im Wesentlichen vertikale Achse drehbar und elastisch in einer Richtung weg von dem Schienenelement bewegbar ist.

## Revendications

1. Élément de rail (1 ; 1' ; 1") adapté pour coopérer avec un collecteur de courant (2") d'un véhicule routier à propulsion électrique pour fournir une énergie électrique audit véhicule, ledit élément de rail étant adapté pour se prolonger le long d'un tronçon de route (3) sur lequel circule le véhicule, dans lequel ledit élément de rail est adapté pour être situé sur, ou pour être en partie encastré dans, une surface de route (4) dudit tronçon de route, dans lequel au moins deux rainures (5a, 5b ; 5a', 5b' ; 5a", 5b") sont formées au moins en partie par ledit élément de rail, dans lequel deux rainures sont formées sur des côtés latéraux opposés (6a, 6b) de celui-ci avec des ouvertures respectives (7a, 7b) des rainures orientées vers des directions latérales opposées (L₁, L₂) par rapport à une direction longitudinale (LD) de l'élément de rail, dans lequel au moins un conducteur électrique (8a, 8b ; 8a', 8b' ; 8a", 8b") est agencé dans chacune desdites deux rainures, lesdits conducteurs électriques se prolongeant le long de la direction longitudinale dudit élément de rail et étant adaptés pour être mis sous tension pour fournir ladite énergie électrique, dans lequel lesdites deux rainures sont disposées dans un plan horizontal commun.

2. Élément de rail selon la revendication 1, dans lequel lesdites rainures (5a, 5b ; 5a', 5b') sont formées dans ledit élément de rail (1 ; 1').

3. Élément de rail selon la revendication 2, comprenant des parties supérieure et inférieure parallèles (9a, 9b ; 9a') agencées à une distance l'une de l'autre et étant reliées l'une à l'autre par un moyen d'écartement (10) pour former lesdites rainures entre lesdites parties supérieure et inférieure.

4. Élément de rail selon la revendication 1, comprenant une partie supérieure (11) adaptée pour être agencée parallèlement à la surface de route à une distance de celle-ci, ladite partie supérieure étant adaptée pour être reliée à ladite surface de route avec un moyen d'écartement (12) pour former lesdites rainures (5a", 5b") entre ladite partie supérieure et ladite surface de route.

5. Élément de rail selon l'une quelconque des revendications 3 et 4, dans lequel ledit moyen d'espacement (10) comprend une pluralité d'éléments d'espacement (10', 10", 10‴) agencés espacés dans la direction longitudinale de l'élément de rail pour fournir au moins un canal traversant orienté latéralement (13) dans ledit élément de rail.

6. Élément de rail selon la revendication 5, dans lequel lesdits éléments d'espacement (10', 10", 10‴) sont espacés de telle sorte que ledit au moins un canal traversant (13), vu dans la direction longitudinale (LD) de l'élément de rail, occupe au moins 25 %, de préférence environ 50 % de la longueur de l'élément de rail.

7. Élément de rail selon l'une quelconque des revendications 3 à 6, dans lequel ladite partie supérieure (9a) est constituée au moins en partie d'un matériau métallique.

8. Élément de rail selon l'une quelconque des revendications 3 à 6, dans lequel ladite partie supérieure (9a') est constituée au moins en partie d'un matériau élastique.

9. Élément de rail selon l'une quelconque des revendications précédentes, dans lequel ledit au moins un conducteur (8a', 8b') est agencé dans ladite rainure (5a', 5b') au niveau d'une partie supérieure de celui-ci.

10. Élément de rail selon l'une quelconque des revendications précédentes, dans lequel ledit au moins un conducteur de l'au moins une rainure est agencé au niveau d'une partie inférieure de celui-ci.

11. Système d'alimentation électrique d'un véhicule à propulsion électrique le long d'un tronçon de route sur lequel circule le véhicule, ledit système comprenant au moins un élément de rail (1, 1', 1") selon l'une quelconque des revendications précédentes, ledit élément de rail étant placé sur, ou en partie encastré dans, une surface de route (4) dudit tronçon de route (3) avec sa direction longitudinale parallèle à une direction longitudinale dudit tronçon de route, dans lequel ledit au moins un élément de rail est orienté par rapport au tronçon de route de telle sorte que les ouvertures (7a, 7b) des deux rainures (5a, 5b ; 5a', 5b' ; 5a", 5b") formées sur des côtés latéraux opposés dudit élément de rail sont orientées vers des directions latérales opposées (L₁, L₂) du tronçon de route.

12. Système selon la revendication 11 lorsqu'elle dépend de la revendication 3, dans lequel ledit élément de rail (1, 1', 1") est en partie encastré dans ladite surface de route (4) avec une surface supérieure de la partie inférieure (9b) alignée sur la surface de route.

13. Système selon l'une quelconque des revendications 11et 12, comprenant en outre un collecteur de courant (2") adapté pour coopérer avec ledit élément de rail (1 ; 1'), dans lequel le collecteur de courant comprend des éléments de contact (2a, 2b ; 2a', 2b' ; 2a", 2b"), et dans lequel le collecteur de courant est adapté pour être relié audit véhicule pour pouvoir être déplacé verticalement et latéralement par rapport au véhicule de sorte que les éléments de contact puissent se déplacer dans lesdites rainures (5a, 5b ; 5a', 5b') dudit élément de rail pour être reliées mécaniquement et électriquement à des conducteurs électriques correspondants (8a, 8b ; 8a', 8b') dudit élément de rail.

14. Système selon la revendication 13, dans lequel ledit collecteur de courant (2a, 2b ; 2a', 2b') comprend un moyen de nettoyage ayant une partie avant (2a₁, 2a₂) inclinée selon un angle aigu par rapport à la direction longitudinale (LD) de l'élément de rail lorsque le collecteur de courant coopère avec l'élément de rail, et dans lequel le moyen de nettoyage peut tourner autour d'un axe sensiblement vertical et se déplacer de manière élastique dans une direction s'éloignant dudit élément de rail.
